# EUROPEAN PATENT APPLICATION

(11) **EP 4 052 976 A1**
(43) Date of publication of application: **07.09.2022**
(21) Application number: 21160854.2
(22) Date of filing: 05.03.2021
(51) Int. Cl.: B60T 13/68, B60T 13/66, B60T 17/04

(54) **VALVE HOUSING FOR A CONTROL VALVE AND CONTROL VALVE**

(71) Applicant: KNORR-BREMSE Systeme für Schienenfahrzeuge GmbH, 80809 München (DE)
(72) Inventor: HEGEDÜS, István, 9024 Györ (HU); LIKTOR, Balazs, 1096 Budapest (DE); PIEPER, Jens-Erik, 80935 München (DE)

(57) **Abstract**

The present invention relates to a valve housing (1) for a control valve, particularly for a rail car pneumatic brake system, comprising at least one fluid interface for enabling fluid communication with a valve assembly, such as a distributor valve and/or a relay valve assembly, to be mounted thereon for controlling a fluid flow through the housing and an electronics interface (9) for connecting to an electronic module.

## Description

The present invention relates to a valve housing for a control valve, particularly for a rail car pneumatic brake system, and a control valve comprising such a valve housing.

Control valves in a pneumatic brake system have to react precisely to changes in the brake pipe pressure and to provide the corresponding brake cylinder pressure. Modern pneumatic brake systems use electric valves that receive braking signals by wire or radio to control the airflow to and from the brake cylinder. In order to provide a safely functioning and reliable pneumatic brake system, the valves and the pipe system connected to the valves need to be monitored and checked.

For such an electric controlled brake system, EP 3 608 184 A1 proposes a valve diagnostic and monitoring system, especially for a distributor valve in a pneumatic brake system for rail cars. The monitoring system can monitor and check different parameters, especially different pressures in the control valve and the pipe system that is in fluid communication with the control valve.

The referenced solution only gives a general overview of such a diagnostic and monitoring system, but there is no concrete mechanical implementation of the concept within the control valve or a solution on how to implement the monitoring system into the control valve. Another problem is that, especially in rail car pneumatic brake systems, the installation space for the control valve is limited, making it difficult to integrate the monitoring system without the control valve interferring with other components of the brake system next to it.

It is an object of the present invention to overcome the above-mentioned disadvantages of the state of the art, particularly to provide a mechanical solution to integrate the monitoring system within a control valve and to provide a standardised interface across all valve products, preferably in order to gain easy access to all pressures that need to be monitored by the monitoring system to provide a reliable pneumatic brake system. This objective is solved by the subject matter of the independent claims. Advantageous embodiments are subject to the dependent claims and will be set out herein below.

A valve housing for a control valve, particularly for a rail car pneumatic brake system, according to the invention, comprises at least one fluid interface for enabling fluid communication with a valve assembly, such as a distributor valve and/or a relay valve assembly, wherein a relay valve assembly can comprise one or more relay valves. The relay valves can quickly increase or decrease the air pressure. They help to shorten the pressure application time of the brake cylinders and also function as quick exhaust valves when the brakes are released. Via the fluid interface the fluid of the brake system, in particular the air stream, can pass from the valve housing to the valve assembly and/or from the valve assembly to the valve housing. The valve housing can also comprise one or more further fluid interfaces for enabling fluid communication with one or more further valve assemblies, such as a distributor valve and/or a relay valve assembly. The fluid interface can be realized by at least one fluid inlet or outlet to provide uninterrupted fluid flow between the valve housing and the valve assembly. The fluid interface can also comprise one or more further fluid inlets and/or outlets. Preferably the fluid interface or fluid interfaces of the valve housing can be standardised to provide a modular construction of the control valve. The valve housing can be made out of steel, aluminium, polymer or other material to be suitable for working temperatures between -50°C and 70°C. In particular the valve housing can be made out of hot-pressed aluminium to make the valve housing lighter.

Preferably the valve housing comprises a further fluid interface with fluid inlets and/or outlets to enable fluid communication with other components of the brake system, for example the brakes, the auxiliary reservoir or the emergency reservoir. This fluid communication may be realized by a pipe system. For example the pipe system connects the valve housing with the brakes, wherein the brake pipe leads the air stream from the valve housing to the brakes, as well as with the emergency reservoir, the auxiliary reservoir and the brake cylinder, wherein the pipes lead the air stream to the valve housing. The valve housing may also comprise one or more fluid channels, preferably one fluid channel, to guide the air stream of the brake system into the valve housing.

The valve assembly being in fluid communication with the valve housing via the fluid interface may be mounted on the fluid interface for controlling a fluid flow through the valve housing. Preferably the valve assembly is mounted on the fluid interface in an easy detachable way, for example by screws, providing a modular construction of the control valve. Therefore the fluid interface may comprise a predetermined mechanical connection adapted to a predetermined mechanical connection of the valve assembly. Such a modular construction allows to exchange the valve assembly easily and has the advantages that the control valve can be adapted flexibly to potential requirements and that all valve assemblies requiring maintenance are easy detachable. The modular construction also allows to make the control valve more compact, because the installation space for the valve assemblies can at least partly be inside the valve housing. This reduces the installation space needed for the control valve and prevents modifications being necessary in order to fit the control valve into the brake system.

According to an aspect of the present invention, the valve housing further comprises an electronics interface for connecting to an electronic module, for example a monitoring and/or diagnostics system. Preferably the electronic module is mounted to the electronics interface, in particular in an easy detachable way. Therefore the electronics interface may comprise a predetermined mechanical connection that may be adapted to a predetermined mechical connection of the electronic module, for example the monitoring system. Preferably the electronics interface allows to access the fluid communication between the valve housing and all valve assemblies mounted to the valve housing as well as the fluid commincation with the pipe system. For example the electronics interface may be designed to access all pressures that need to be monitored by the monitoring system to provide a reliable brake system. Therefore the electronics interface is preferably in fluid communication with the fluid interfaces of the valve housing. The electronics interface may also allow access to a breather and safety valve to balance the internal pressures of the control valve with the environment and to release internal over pressure if for example a pipe bursts. The electronics interface can easily be adapted to a predetermined interface of the electronic module, for example to the interface of the monitoring system. Thus the valve housing according to the invention provides a mechanical solution to integrate the monitoring system within a control valve and provides a standardised interface across all valve products.

The monitoring and/or diagnostics system, that can be implemented within the control valve with a valve housing according to the invention, can monitor and check different parameters in the control valve and the pipe system in order to provide a reliable brake system. The parameters may be related to the flow and/or pressure of the fluid at various points in the control valve or the pipe system. Other parameters may include but are not limited to temperature, moisture or vibrations at various points in the control valve or the pipe system. It is also possible to monitor one or more further pressures and/or one or more further other parameters. In an example embodiment there are various pressures that need to be monitored by the monitoring system in order to provide a reliable brake system. These include but are not limited to the pressures of an auxiliary reservoir and an emergency reservoir of the control valve, a relay valve, a brake cylinder, a brake pipe and a distributor valve. In this embodiment a valve housing, according to the invention enables easy access to all pressures that need to be monitored by the monitoring system to provide a reliable pneumatic brake system, because they can all be accessed via the electronics interface.

In an example embodiment the valve housing further comprises at least one, particularly at least two, three, four, five, six, seven or eight, fluid channels. The valve housing can also comprise one or more further fluid channels. The fluid channels enable uninterrupted fluid flow through the valve housing. Preferably the fluid channels connect the fluid interfaces of the valve housing with the electronics interface to provide access to the fluid communication for example by the monitoring system. Each fluid channel is configured to be in fluid communication with a fluid consumer and/or a fluid source. Such fluid consumers and fluid sources may be but are not limited to valve assemblies, such as a distributor valve or a relay valve, or other components of the brake system connected via the pipe system, such as the brakes, the auxiliary reservoir or the emergency reservoir. For example the number of fluid channels can be adapted to the number of pressures that need to be monitored by the monitoring system. Preferably the fluid channels are inside the valve housing to reduce the installation space of the control valve.

In another example embodiment the electronics interface comprises a predetermined mechanical connection in particular adapted to the predetermined mechanical electronic module connection to provide a modular construction of the control valve. If there is no need for an electronic module, it can also be possible to mount a dummy with the same predetermined mechanical connection to the electronics interface, to cover the electronics interface in order to prevent air from getting into the brake system. The dummy preferably comprises an essentially even plate structure.

In another example embodiment the electronics interface is designed such that the electronic module, for example the monitoring system, may access, in particular measure and/or monitor, at least one parameter of the fluid flow, such as a pressure. The electronics interface may also be designed such that the electronic module can access one or more further parameters of the fluid flow, such as a pressure. The electronics interface may also be designed to access other parameters of the fluid flow that can include but are not limited to temperature, vibrations and/or moisture. The electronics interface is further designed such that the electronic module may access the parameters of the fluid flow through the valve housing, in particular through at least two fluid channels. There may also be one or more further fluid channels through the valve housing such that the electronic module can access further parameters of the fluid flow.

In another example embodiment the electronics interface design is adapted to the number of fluid channels to enable easy access to all parameters of the fluid flow that need to be monitored by the monitoring system, in particular to all pressures that need to be monitored.

In another example embodiment the electronics interface comprises a preferably flat plate providing a simple mechanical solution to integrate the electronic module, for example the monitoring system, within the control valve. The electronics interface further comprises at least one opening, particularly at least two, three, four, five, six, seven or eight openings, configured to receive the fluid flow and to branch the fluid flow to the electronic module. The electronics interface can also comprise one or more further openings configured to receive the fluid flow and to branch the fluid flow to the electronic module. Preferably each opening is connected to a fluid channel. This allows placing the electronic module, for example the monitoring system, at any position within the control valve to prevent interference of the control valve with other components of the brake system next to the control valve. Thus it allows using the limited installation space, especially in rail car pneumatic brake systems, in an optimal way. It also reduces the installation space for the control valve.

According to another aspect of the invention that can be combined with previous aspects and example embdiments of the invention, a control valve, particularly for a rail car pneumatic brake system, is provided.

The control valve comprises a valve housing with at least one fluid interface enabling fluid communication with a valve assembly, such as a distributor valve and/or a relay valve assembly, wherein the relay valve assembly can comprise one or more relay valves. The valve housing can also have one or more further fluid interfaces enabling fluid communication with one or more further valve assemblies, such as a distributor valve and/or a relay valve assembly. The valve assembly is mounted on the fluid interface for controlling the fluid flow through the valve housing. Preferably the valve arrangement is mounted in an easy detachable way, for example by screws, to provide a modular construction of the control valve. Preferably the valve housing comprises a further fluid interface to enable fluid communication with other components of the brake system. This communication can be realized with a pipe system. The valve housing further comprises an electronics interface connected to an electronic module, for example a monitoring system, or a dummy for occupying the electronics interface. Preferably the electronics interface is in fluid communication with the other interfaces of the valve housing, providing access to the fluid communication between the valve housing and the valve assemblies as well as to the fluid communication with the pipe system. In particular the electronics interface may enable access to various parameters of the fluid flow that need to be measured in order to provide a reliable brake system, for example various pressures. The control valve according to the invention provides a mechanical solution to integrate the monitoring system within the control valve. It also provides a standardised interface across all valve products, because the electronics interface can be easily adapted to a predetermined interface of the electronic module, for example the interface of the monitoring system. It also enables easy access to all pressures that need to be monitored by the monitoring system to provide a reliable pneumatic brake system, because they can all be accessed via the electronics interface.

In an example embodiment the electronic module comprises a measuring and/or monitoring device, in particular a data hub, configured to determine and/or monitor at least one parameter of the fluid flow, such as a pressure. The measuring and/or monitoring device may also determine and/or monitor one or more further parameters of the fluid flow, such as a pressure. Other parameters of the fluid flow that can be determined and/or monitored can include but are not limited to temperature, vibrations and/or moisture. In an example embodiment the pressures that need to be measured and/or monitored include but are not limited to the pressures of an auxiliary reservoir and an emergency reservoir of the control valve, a relay valve assembly, a distributor valve, a brake cylinder and a brake pipe.

In a further example embodiment the control valve further comprises at least one pressure line for connecting to a compressed air pipe system. The control valve can also comprise one or more further pressure lines for connecting to a compressed air pipe system. The at least one pressure line enables fluid communication with other components of the brake system, such as the brakes, the auxiliary reservoir or the emergency reservoir.

In another example embodiment the measuring and/or monitoring device, in particular the data hub, comprises a predetermined sensor arrangement of at least one sensor, in particular a pressure sensor. The predetermined sensor arrangement can also comprise one or more further sensors, in particular one or more further pressure sensors. The predetermined sensor arrangement can further include other sensors including but not limited to temperature sensors, accelerometers and/or moisture sensors. The data hub helps to integrate the data from all sensors and to process it. It can also transmit the data to a processing unit wirelessly or by wire. In this embodiment the electronics interface design is adapted to the predetermined sensor arrangement of the monitoring system, enabling easy access to all parameters, in particular pressures, that need to be monitored by the monitoring system. The electronic module can further comprise an energy harvesting module to supply the sensors and the data hub with energy.

In a further example embodiment the electronics interface comprises a preferably flat plate providing a simple mechanical solution to integrate the monitoring system within the control valve. The electronics interface further comprises at least one opening, particularly at least two, three, four, five, six, seven or eight openings, configured to receive the fluid flow and to branch off the fluid flow to the electronic module. The electronics interface can also comprise one or more further openings configured to receive the fluid flow and to branch off the fluid flow to the electronic module. This allows placing the monitoring system at any position within the control valve to prevent interference of the control valve with other components of the brake system next to the control valve. Thus it allows using the limited installation space, especially in rail car pneumatic brake systems, in an optimal way. It also reduces the installation space for the control valve. In this embodiment the openings are adapted to the predetermined sensor arrangement of the monitoring system.

In another example embodiment the pressure sensors of the predermined sensor arrangement are each allocated to one electronics interface opening, enabling easy access to all parameters, for example all pressures, that need to be monitored by the monitoring system in order to provide a reliable brake system.

In another example embodiment the valve housing is configured according to one of the previous aspects or example embodiments to make use of the advantages described above.

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Fig. 1: shows an example embodiment of a valve housing for a control valve according to the invention configured to implement a monitoring system within the control valve.
- Fig. 2: shows an example embodiment of a control valve according to the invention comprising a valve housing configured to implement a monitoring system within the control valve.
- Fig. 3: shows a schematic view of a control valve according to invention comprising an electronic module.
- Fig. 4: shows the electronics interface of the valve housing adapted to the predetermined interface of the monitoring system.

In the following description of prefered embodiments of the present invention, a valve housing for a control valve according to the invention is generally indicated with the reference numeral 1. Further a control valve comprising such a valve housing 1 is generally indicated with the reference numeral 10.

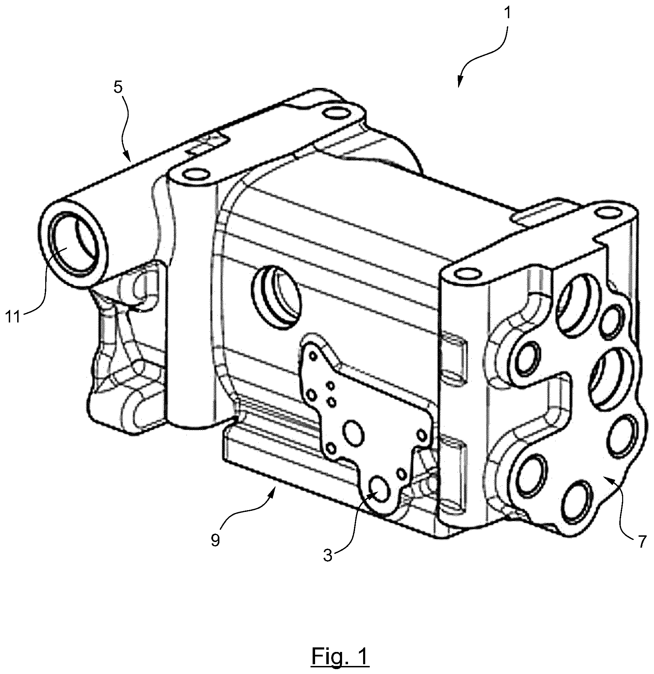

Fig. 1 shows a valve housing 1 for a control valve, particularly of a rail car pneumatic brake system. The valve housing 1 is designed to hold all modules of the control valve to provide a modular construction and to adapt the control valve as flexibly as possible to potential requirements. The valve housing 1 is further designed to mount the control valve for example to a chassis structure of a rail car and to connect the control valve to other components of the brake system.

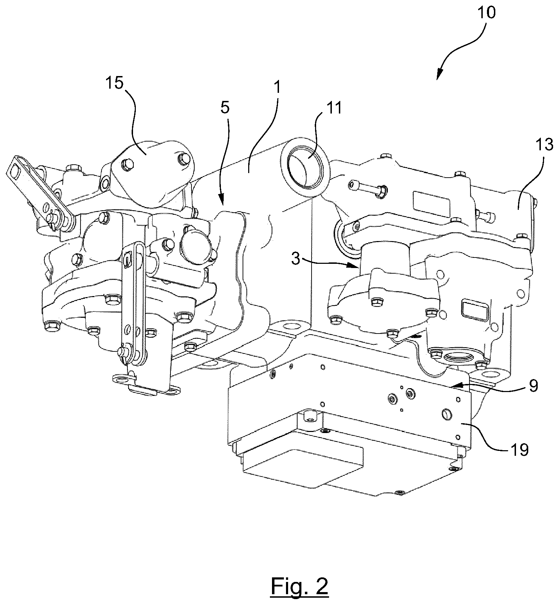

The valve housing 1 comprises three fluid interfaces. The valve housing can also comprise a fourth fluid interface (not shown). Two (or three, if the valve housing 1 comprises four fluid interfaces), preferably standardised, fluid interfaces 3, 5 of the valve housing 1 enable fluid communication with the modules of the control valve 10, in the example embodiment (shown in Fig. 2) two valve assemblies 13, 15. The first fluid interface 3 enables fluid communication with a relay valve assembly 13, comprising one relay valve. The second fluid interface 5 enables fluid communication with a distributor valve 15. If the control valve 10 comprises four fluid interfaces, the fourth, preferably standardised, fluid interface may enable fluid communication with a second relay valve (not shown) adjacent to the first relay valve 13. Via the fluid interfaces 3, 5 the fluid, in particular the air stream of compressed air from the pneumatic brake system, can pass from the valve housing 1 to the relay valve 13 and back to the valve housing 1 as well as from the valve housing 1 to the distributor valve 15 and back to the valve housing 1. The third fluid interface 7 enables fluid communication with a pipe system that is connected to other components of the brake system (not shown in Fig.1 and Fig. 2). In particular the pipe system connects the valve housing 1 with the brakes, wherein the brake pipe leads the air stream from the valve housing 1 to the brakes, as well as the emergency reservoir, the auxiliary reservoir and the brake cylinder, wherein the pipes lead the air stream to the valve housing 1. All three (or four) fluid interfaces 3, 5, 7 comprise various fluid inlets and/or outlets to enable uninterrupted fluid flow.

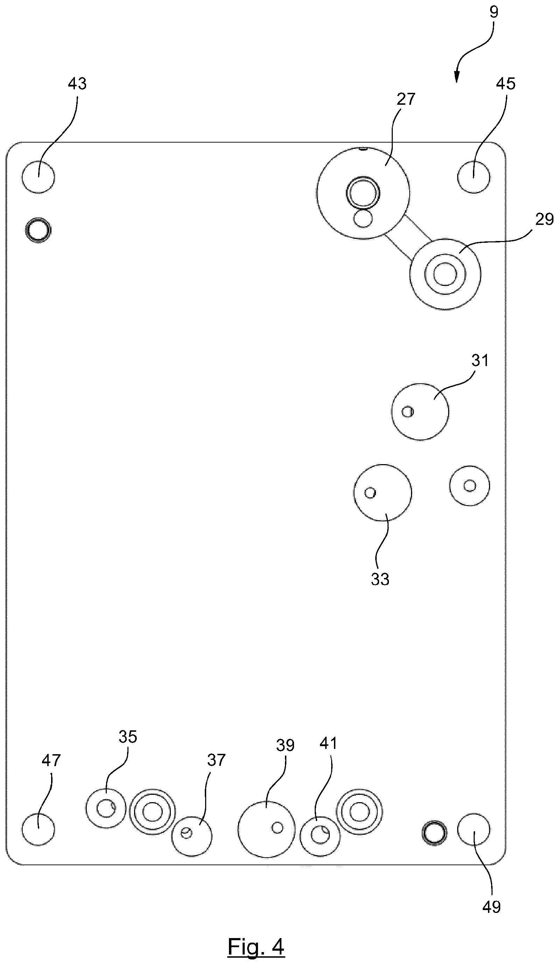

The valve housing 1 also comprises a further interface, an electronics interface 9 (shown in detail in Fig. 4) for connecting to an electronic module 19, in particular a monitoring system that can measure and/or monitor different parameters in the control valve 10 and the pipe system in order to provide a reliable pneumatic brake system. In particular the monitoring system 19 measures different pressures in the control valve 10 and the pipe system. These are the four pressures in the pipe system being in fluid communication with the valve housing 1 (not shown in Fig. 1 and Fig. 2) as well as the pressures of the fluid streams between the valve housing 1 and the distributor valve 15 and between the valve housing 1 and the relay valve 13. The electronics interface 9 enables access to the fluid communication between the valve housing 1 and the valve assemblies 13, 15 and between the valve housing and the pipe system (not shown in Fig. 1 and Fig. 2). To enable this access to the fluid communication the valve housing 1 comprises a number of fluid channels that connect the fluid interfaces 3, 5, 7 and the electronics interface 9 through the valve housing 1, wherein each fluid channel is in fluid communication with one fluid consumer and/or fluid source, in this example the valve assemblies 13, 15 and/or the other components of the brake system connected via the pipe system. The fluid channels are preferably inside the valve housing 1 to reduce the installation space of the control valve 10.

The valve housing 1 further comprises an additional fluid channel 11 to guide the fluid, in particular the air stream of compressed air from the pneumatic brake system, into the valve housing 1. From there it passes through the valve housing 1 to the relay valve 13 and the distributor valve 15 and then back to the valve housing 1 and through the valve housing 1 and the pipe system to the brakes.

Fig. 2 shows a control valve 10, particularly for a rail car pneumatic brake system, comprising a valve housing 1, a relay valve 13, a distributor valve 15 and a pipe system being in fluid communication with each other via the fluid interfaces 3, 5, 7. The control valve 10 further comprises a monitoring system 19 with access to the fluid communication between the valve housing 1 and the valve assemblies 13, 15 as well as between the valve housing 1 and the pipe system. This access is provided by the electronics interface 9. The modules 13, 15, 19 of the control valve 10 are mounted to the valve housing 1 in an easy detachable way. The relay valve 13 and the distributor valve 15 are mounted to the corresponding fluid interfaces 3, 5 of the valve housing by screws to control the fluid flow through the valve housing 1. The monitoring system 19 is mounted to the electronics interface 9 by screws. Therefore the electronics interface 9 comprises a predetermined mechanical connection with four holes 43, 45, 47, 49 (shown in detail in Fig. 4) that is adapted to the predetermined mechanical connection of the monitoring system 19.

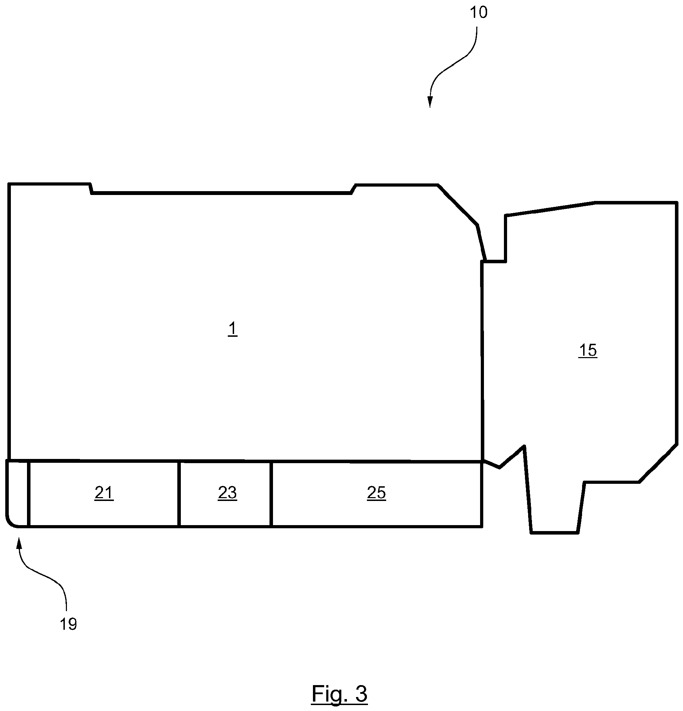

Fig. 3 shows a schematic view of a control valve 10 comprising a valve housing 1, a distributor valve 15 and a monitoring system 19. Fig. 3 also shows the components of the monitoring system 19. The monitoring system 19 comprises a predetermined sensor arrangement 21 with one pressure sensor for each pressure that needs to be monitored in order to provide a reliable brake system. The monitoring system 19 also comprises a data HUB 23 to integrate the data from all sensors, to process and transmit it. The monitoring system 19 further comprises an energy harvesting module 25 to supply the sensors of the predetermined sensor arrangement 21 and the data hub 23 with energy.

Fig. 4 shows the electronics interface 9 that is adapted to the predetermined sensor arrangement 21 of the monitoring system 19. It has a number of openings adapted to the number of pressures that need to be monitored by the monitoring system 19. The openings are adapted to the predetermined sensor arrangement 21 of the monitoring system 19, wherein each pressure sensor is allocated to one opening of the electronics interface 9. There are two openings for the distributor valve 15 (35, 37), to monitor the pressure of the air flow between the valve housing 1 and the distributor valve 15. There are also two openings for the relay valve 13 (31, 33) to monitor the air flow between the valve housing 1 and the relay valve 13. If the control valve 10 comprises a second relay valve adjacent to the first relay valve 13, the electronics interface 9 comprises two further openings adjacent to the openings 31, 33 for the first relay valve 15. The openings of the electronics interface 9 also enable fluid communication with the pipe system. There is one opening each for the pressure of the brake pipe (35) leading the air stream from the valve housing 1 to the brakes and the pressures of the brake cylinder (31), the pre-control pressure (37), the emergency reservoir (39) and the auxiliary reservoir (41), wherein the pipes lead the air stream to the valve housing 1.

Further the electronics interface 9 comprises two openings 27, 29 for a breather and safety valve (not shown) to balance the internal pressures of the control valve 10 with the environment and to release internal over pressure if for example a pipe bursts.

Further there is a predetermined mechanical connection comprising four holes 43, 45, 47, 49 to mount the monitoring system 19 on the electronics interface 9. In an alternative embodiment (not shown) a dummy, preferably a dummy plate can be mounted to the electronics interface 9. The dummy plate prevents air from getting into the brake system in brake systems without a monitoring system.

It should be clear that the electronics interface 9 in Fig. 4 is only one example of an electronics interface adapted to an exemplary monitoring system 19 to explain the function of such an electronics interface. In another example of an electronics interface, the interface could comprise more or less openings to monitor more or less pressures or other parameters and/or the openings could be arranged in a different way.

The features disclosed in the above description, the figures and the claims may be significant for the realization of the invention in its different embodiments individually as in any combination.

### REFERENCE SIGN LIST

- 1: valve housing
- 3: fluid interface to connect to a relay valve
- 5: fluid interface to connect to a distributor valve
- 7: fluid interface to conncect to a pipe system
- 9: electronics interface
- 10: control valve
- 11: fluid channel
- 13: relay valve
- 15: distributor valve
- 19: monitoring system
- 21: predetermined sensor arrangement
- 23: data HUB
- 25: energy harvesting module
- 27, 29: openings for a breather and safety valve
- 31, 33: openings for the relay valve
- 35, 37: openings for the distributor valve
- 39: opening for the emergency reservoir
- 41: opening for the auxiliary reservoir
- 43, 45, 47, 49: holes to mount the monitoring system

## Claims

1. Valve housing (1) for a control valve, particularly for a rail car pneumatic brake system, comprising at least one fluid interface for enabling fluid communication with a valve assembly, such as a distributor valve and/or a relay valve assembly, to be mounted thereon for controlling a fluid flow through the housing and an electronics interface (9) for conntecting to an electronic module.

2. Valve housing (1) according to claim 1, further comprising at least one, particularly at least two, three, four, five, six, seven or eight, fluid channels each configured to be in fluid communication with a fluid consumer and/or a fluid source.

3. Valve housing (1) according to claim 1 or 2, wherein the electronics interface (9) comprises a predetermined mechanical connection in particular adapted to a predetermined mechanical electronic module connection.

4. Valve housing (1) according to any of the preceding claims, wherein the electronics interface (9) is designed such that the electronic module may access, in particular measure and/or monitor, at least one parameter of the fluid flow, such as a pressure, through the housing (1), in particular through the at least two fluid channels.

5. Valve housing (1) according to any of the preceding claims, wherein the electronics interface (9) design is adapted to the number of fluid channels.

6. Valve housing (1) according to any of the preceding claims, wherein the electronics interface (9) comprises a preferably flat plate and at least one opening, particularly at least two, three, four, five, six, seven or eight openings, configured to receive the fluid flow and to branch off the fluid flow to the electronic module.

7. Control valve (10), particularly for a rail car pneumatic brake system, comprising a housing (1) with at least one fluid interface enabling fluid communication with a valve assembly, such as a distributor valve and/or a relay valve assembly, mounted thereon for controlling a fluid flow through the housing (1) and an electronics interface (9) conntected to an electronic module or a dummy for occupying the electronics interface (9).

8. Control valve (10) according to claim 7, wherein the electronic module comprises a measuring and/or monitoring device (19), in particular a data hub, configured to determine and/or monitor at least one parameter of the fluid flow, such as a pressure.

9. Control valve (10) according to claim 7 or 8, further comprising at least one pressure line for connecting to a compressed air pipe system.

10. Control valve (10) according to any of claims 8 to 9, wherein the measuring and/or monitoring device (19), in particular the data hub, comprises a predetermined sensor arrangement (21) of at least one sensor, in particular a pressure sensor, and the electronics interface (9) design is adapted to the predetermined sensor arrangement (21).

11. Control valve (10) according to claim 10, wherein the electronics interface (9) comprises a preferably flat plate and at least one opening, particularly at least two, three, four, five, six, seven or eight openings, configured to receive the fluid flow and to branch off the fluid flow to the electronic module, wherein the arrangement of the opening is adapted to the predetermined sensor arrangement (21).

12. Control valve (10) according to any of claims 10 to 11, wherein the pressure sensors of the predetermined sensor arrangement (21) are each allocated to one electronics interface opening.

13. Control valve (10) according to any of claims 7 to 12, wherein the valve housing (1) is configured according to one of the preceding claims.
